(19) **Europäisches Patentamt**

**European Patent Office**

**Office européen des brevets**

(11) **EP 0 630 815 B1**

(12) ## EUROPÄISCHE PATENTSCHRIFT

(45) Veröffentlichungstag und Bekanntmachung des Hinweises auf die Patenterteilung:
27.11.1996 Patentblatt 1996/48

(51) Int. Cl.$^6$: **B65B 23/14**, B65G 47/84

(21) Anmeldenummer: 94810357.7

(22) Anmeldetag: 17.06.1994

(54) **Vorrichtung zum Trennen, Fördern und Gruppieren von flachen Gegenständen**

Apparatus for separating, transferring and grouping flat articles

Installation pour séparer, transférer et grouper des objets aplatis

(84) Benannte Vertragsstaaten:
**CH DE ES GB IT LI NL**

(30) Priorität: **25.06.1993 CH 1913/93**

(43) Veröffentlichungstag der Anmeldung:
**28.12.1994 Patentblatt 1994/52**

(73) Patentinhaber: **SIG Schweizerische Industrie-Gesellschaft**
**CH-8212 Neuhausen am Rheinfall (CH)**

(72) Erfinder: **Loewenthal, Horst**
**D-7897 Tiengen (DE)**

(74) Vertreter: **Schick, Carl et al**
**ISLER & PEDRAZZINI AG,**
**Gotthardstrasse 53**
**8002 Zürich (CH)**

(56) Entgegenhaltungen:
**EP-A- 0 521 428**      **CH-A- 241 124**
**US-A- 2 872 020**      **US-A- 4 413 462**

**Beschreibung**

Die vorliegende Erfindung betrifft eine Vorrichtung zum Trennen, Fördern und Gruppieren von flachen Gegenständen gemäss dem Oberbegriff des Patentanspruchs 1.

In der Verpackungstechnik werden oft Vorrichtungen eingesetzt, um flache Gegenstände, insbesondere Biscuits oder andere Nahrungsmittel, zu trennen, die über einen Vorratsschacht befördert werden, in dem sie aneinanderliegen, und um sie weiterzufördern und zu gruppieren (siehe US-A-4 413 462).

Es ist nun Aufgabe der vorliegenden Erfindung, eine Vorrichtung dieser Gattung zu schaffen, die eine hohe Leistung aufweist. Diese Aufgabe wird erfindungsgemäss durch eine Vorrichtung mit den im kennzeichnenden Teil des Patentanspruchs 1 angegebenen Merkmalen gelöst.

Vorteilhafte Ausführungen der Erfindung sind in den abhängigen Ansprüchen angegeben.

Die Vorrichtung nach der Erfindung ist sehr kompakt und bietet daher eine gute Uebersichtlichkeit und eine einfache Wartung mit nur einem Schacht pro Reihe und nur einer Mitnehmerreihe.

Nachfolgend wird die Erfindung beispielsweise anhand einer Zeichnung näher erläutert. Es zeigt:

Fig. 1    eine Seitenansicht der erfindungsgemässen Vorrichtung,

Fig. 2    eine Draufsicht einer solchen Vorrichtung mit abmontierten Vorratsschächten,

Fig. 3    eine Schnittansicht nach der Linie III-III in Fig. 1, und

Fig. 4    eine schematische Darstellung zur Erläuterung der Arbeitsweise der Trennmittel einer solchen Vorrichtung.

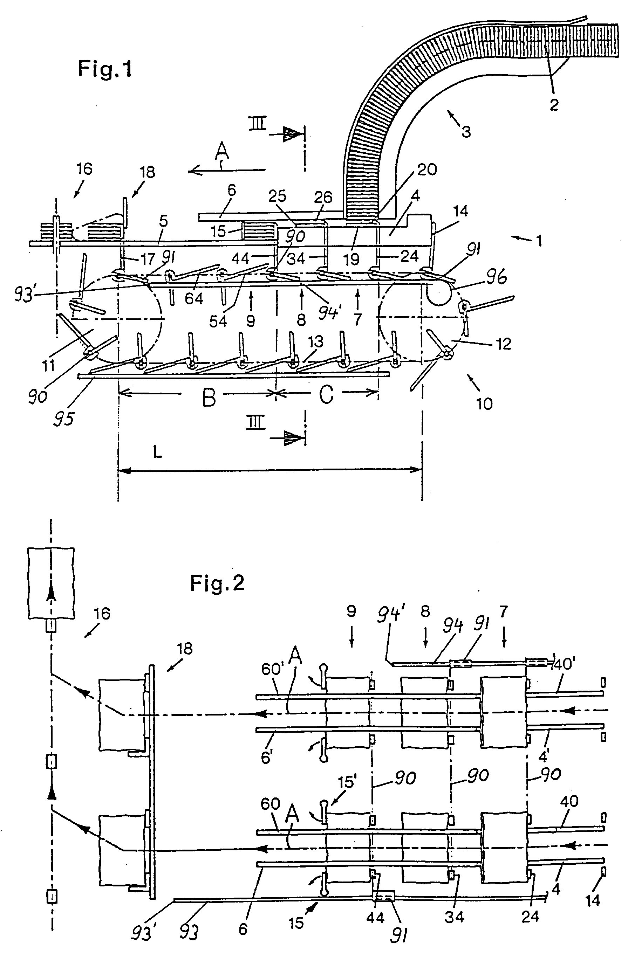

Die in Fig. 1 dargestellte Vorrichtung 1 weist einen mit Biscuits 2 gefüllten Vorratsschacht 3 auf, der derart gebogen ist, dass die am Eingang des Vorratsschachts vertikal aneinandergereiht ankommenden Biscuits 2 einen durch die Krümmung des Vorratsschachts bedingten Richtungswechsel erfahren, so dass sie am Ausgang des Vorratsschachts horizontal übereinandergestapelt ausgestossen werden. Die Biscuits werden auf zwei parallele Schienen ausgestossen, von denen in Fig. 1 nur eine Schiene 4 sichtbar ist. An der Stirnseite der Schiene 4 ist ein Stab 5 angeordnet, der als Verlängerung der Schiene 4 dient, wobei sich die Auflage-oder Tragfläche des Stabes 5 in einer tieferen Ebene als die Auflage- oder Tragfläche der Schiene 4 befindet. Ein zweiter in Fig. 1 nicht sichtbarer Stab verläuft parallel zum Stab 5 und ist ebenfalls als Verlängerung der hinteren Schiene angeordnet. In einem Abstand über den Schienen 4 und den Stäben 5 befindet sich je ein länglicher, vorzugsweise stegförmiger Niederhalter 6.

Der Abstand zwischen der Schiene 4 und dem Niederhalter 6 ist vorgesehen, um einen Luftspalt zu bilden, in dem beispielsweise 1 bis 3 Biscuits von den Mitnehmern gestossen werden können, und der Abstand zwischen dem Stab 5 und dem Niederhalter 6 ist vorgesehen, um einen Luftspalt zu bilden, in dem beispielsweise 5 bis 10 Biscuits von den Mitnehmern gestossen werden können.

Fig. 1 zeigt somit Biscuits in drei Positionen 7, 8 und 9 im Bereich der Schiene 4 und des Niederhalters 6. Die Position 7 entspricht der Trennstation und die Position 9 der Gruppierstation.

Die Schiene 4 und der Stab 5, die eine Auflage 4, 5 bilden, befinden sich in einem Abstand über Fördermittel, die beispielsweise durch eine Transporteinrichtung 10 gebildet sind, die zwei Rollen 11, 12 und eine endlose Förderkette 13 umfasst, die eine Reihe von Mitnehmern 14, 24, 34, ... trägt. Die Gesamtlänge einer Schiene 4 und eines Stabs 5 ist vorzugsweise länger als der Abstand L zwischen den Achsen der Rollen 11 und 12. Die hintere Rolle 12 befindet sich in einem Bereich unterhalb und hinter dem Ausgang des Vorratsschachts 3. Die Mitnehmer 14, 24, 34, ... sind in Abständen entlang der endlosen Förderkette 13 angeordnet, mit der mindestens einige Mitnehmer 54, 64 schwenkbar verbunden sind.

Fig. 2 zeigt eine für zwei Vorratsschächte vorgesehene Vorrichtung, bei der aber die zwei Vorratsschächte abmontiert sind. In Fig. 2 sind vier parallele Schienen 4, 40, 4', 40' und vier parallele Niederhalter 6, 60, 6', 60' sichtbar.

In der Position 7 befinden sich je zwei übereinandergestapelte rechteckige Biscuits, die auf den Schienen 4, 40 bzw. 4', 40' liegen. In der Position 8 befinden sich je zwei übereinandergestapelte rechteckige Biscuits, die zwischen den Schienen 4, 40 bzw. 4', 40' und den Niederhaltern 6, 60 bzw. 6', 60' geführt werden. In der Position 9 befinden sich vier übereinandergestapelte rechteckige Biscuits, die zwischen den in der Fig. 2 nicht dargestellten Stäben, wie dem Stab 5 in Fig. 1, und den Niederhaltern 6, 60 bzw. 6', 60' geführt werden.

In Fig. 2 sind die Spitzen des Mitnehmers 14 und der anderen Mitnehmer 24, 34, 44 sichtbar, die die Biscuits von hinten in Pfeilrichtung nach vorne stossen. In der Position 9 sind Anschläge oder Haltemittel 15, 15' vorhanden, die schwenkbar um eine senkrecht zur Bewegungsebene der Biscuits verlaufende Achse angeordnet sind, um die Biscuits in dieser Position 9 jeweils während einer vorbestimmten Zeit von vorne zu halten, bis eine vollständige Gruppe gebildet ist. Zur Vereinfachung der Darstellung ist in Fig. 2 die Förderkette 13 (Fig. 1) nicht dargestellt, die sich unterhalb der Schienen 4, 40, 4', 40' und Stäbe 5 befindet.

In einem Bereich oberhalb und vor der Rolle 11 (Fig. 1) ist ein Querförderer 16 vorhanden, der die Biscuits zu einer Verpackungsmaschine bringt. Für die Uebergabe der Biscuits an den Querförderer sind vorzugsweise zwei Varianten vorgesehen. Bei der ersten Variante kann die Uebergabe mit Hilfe derselben Mitnehmer, beispielsweise durch den Mitnehmer 17 erfolgen. Bei der Variante nach den Figuren 1 und 2 erfolgt die Uebergabe mit Hilfe eines Schiebeförderers 18. Gemäss einer bevorzugten Subvariante macht der Schiebeförderer 18 eine komplexe Bewegung wie folgt: 1. von unten nach oben und von links nach rechts bis zu einer Höhe über die gestapelte Gruppe Biscuits, 2. von oben nach unten hinter der Gruppe, 3. von hinten nach vorne, um die Gruppe nach vorne zu schieben, 4. in der unteren Ebene weiter nach vorne, jedoch in einem Winkel zur ersten Förderrichtung und zurück.

Gemäss einer einfachen Subvariante braucht der Schiebeförderer 18 nur die Bewegungsschritte 1 bis 3 durchzuführen.

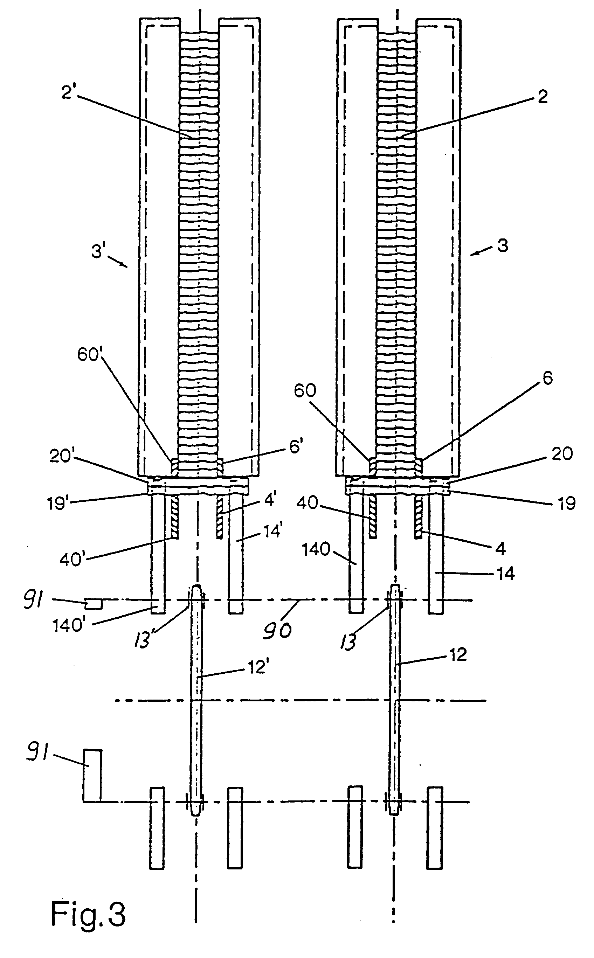

In Fig. 3 sind zwei parallel angeordnete Vorratsschächte 3, 3' mit Biscuits 2 bzw. 2' dargestellt. Die Rollen 12, 12' tragen eine nicht dargestellte endlose Förderkette, an der Mitnehmer, beispielsweise die Mitnehmer 14, 140, 14', 140' angeordnet sind. Zwischen den Schienen 4, 40 und den Niederhaltern 6, 60 befinden sich zwei übereinanderliegende Biscuits 19 und 20, die durch die Mitnehmer 14 und 140 nach vorne verschoben werden können. Zwischen den Schienen 4', 40' und den Niederhaltern 6', 60' befinden sich zwei übereinanderliegende Biscuits 19' und 20', die durch die Mitnehmer 14' und 140' nach vorne verschoben werden können. Aus den Figuren 2 und 3 ist ersichtlich, dass sich die Mitnehmer in einer Ebene bewegen, die parallel zur Symmetrieebene der Schienen oder der Stäbe verläuft, und dass sich die Stäbe oder Schienen innerhalb des durch die Mitnehmer definierten Raums befinden.

Die Vorrichtung nach den Figuren 1 bis 3 funktioniert folgendermassen:

Die Mitnehmer bewegen sich im oberen Bereich der endlosen Förderkette 13 von rechts nach links. Der Mitnehmer 24 in der Position 7 verschiebt zwei Biscuits 19, 20 zwischen den Schienen 4, 40 und den Niederhaltern 6, 60. Entsprechendes gilt für den Mitnehmer 34 in der Position 8, der zwei Biscuits 25, 26 nach links verschiebt. In der Position 9 fallen die Biscuits von der Auflage- oder Gleitfläche der Schienen 4, 40 zu der tiefer liegenden Auflage- oder Gleitfläche der Stäbe 5. Bei der Position 9 werden nacheinander zwei Mitnehmer 54, 64 nach hinten geschwenkt, so dass sie keine Verschiebungswirkung mehr ausüben. In Position 9 wird die Gruppe durch die Anschläge 15, 15' gehalten, bis die Gruppe mit 6 Biscuits vollständig gebildet ist. In diesem Moment werden die Anschläge 15, 15' seitlich geschwenkt, um eine weitere Bewegung der Biscuits zu ermöglichen, die durch einen hinteren nach oben geschwenkten Mitnehmer 44 verschoben werden. Zu diesem Zweck ist vorzugsweise die Distanz zwischen dem Mitnehmer 17 oder der Schiebefläche der Einrichtung 18 in ihrer hintersten Position (Fig. 2) und der Ebene (Mitnehmer 44), in der sich die Verbindung von den Schienen mit den Stäben befindet, grösser als der Abstand zwischen dieser Ebene (Mitnehmer 44) und dem hintersten Rand (Mitnehmer 24) des Vorratsschachtausgangs. Auf jeden Fall ist aber diese erste Distanz grösser als der Abstand zwischen zwei benachbarten Mitnehmern, die allgemein als Trennmittel bezeichnet werden.

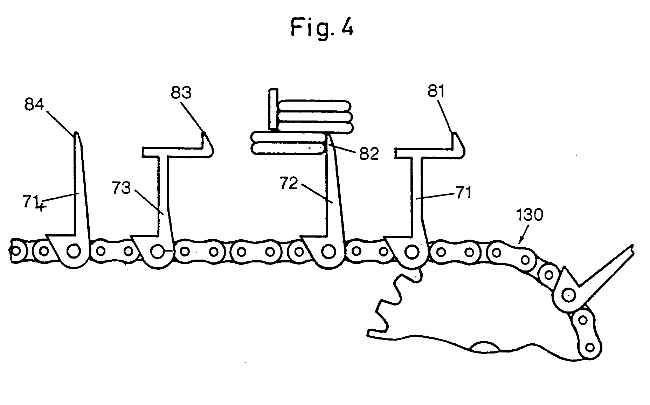

Fig. 4 zeigt eine Ausführung, bei der beispielsweise die Mitnehmer 71, 72, 73, 74 alternierend unterschiedlich ausgestaltet sind, um jeden zweiten Mitnehmer 71, 73 mit Hilfe von Ausschaltmitteln oder Absenkgliedern nach unten zu schwenken und dadurch ihre Arbeitswirkung zu verhindern, wobei auch Einschaltmittel vorgesehen sein können, um diese Mitnehmer oder Trennmittel wieder in Arbeitsstellung zu bringen.

In der Ausführung nach Fig. 1 bis 3 kann man eine erste totale Anzahl N Mitnehmer 14, 24, 34, 44, 54, 64, 17, ... von einer zweiten Anzahl n Mitnehmer 54, 64, ... unterscheiden, die schwenkbar ausgestaltet sind, wobei n = 2N/3 ist, denn der Mitnehmer 44 beispielsweise wird mindestens im oberen Bereich der Förderketter nicht abgesenkt.

Bei der Ausführung nach Fig. 4 sind beispielsweise die Mitnehmer 71 und 73 schwenkbar und die Mitnehmer 72 und 74 nicht schwenkbar an der Förderkette 130 angeordnet.

In Figuren 1 bis 3 ist dargestellt, dass die Mitnehmer 14, 14', 17, 24, 34, 44, 54, 64 auf in den Ketten 13, 13' drehbaren Achsen 90 befestigt sind. Auf den Achsen 90 sind einseitig Arme 91 befestigt, die im Bereich des oberen Trums auf Führungen 93, 94 aufliegen. Das Eigengewicht der Arme 91 und der Widerstand der Biscuits 19 schwenken die Mitnehmer 54, 64 beim Erreichen des Führungsendes 94' aus der Biscuit-Transportstellung in die in Fig. 1 gezeigte abgesenkte Stellung, in welcher sie unter dem sich bildenden Stapel wegbewegt werden. Die Spitzen der Mitnehmer 54, 64 liegen auf nachfolgenden Elementen auf. Das bei der Einrichtung 18 angeordnete Ende 93' der auf der anderen Seite angeordneten Führung 93 bewirkt durch Schwerkraft des Arms 91 und den Transportwiderstand der Biscuits das Schwenken der Mitnehmer 17, 44 in Uhrzeigersinn. Allfällige weitere Führungen 95 für Mitnehmer oder Arme können wie im Bereich des unteren Trums auch bei den Rollen 11, 12 nach Bedarf vorgesehen werden. Der Anfang 96 bzw. das Ende 93', 94' der Führungen 93, 94 können als Einschalt- bzw. Ausschaltmittel der Mitnehmer bezeichnet werden.

Bei der Ausführung nach Fig. 4 sind die Mitnehmer unterschiedlich ausgestaltet, jedoch derart, dass der Abstand zwischen zwei benachbarten Wirkungspunkten 81, 82, 83, 84 der Mitnehmer 71, 72, 73 bzw. 74 in der Arbeitslage (nicht abgesenkt) jeweils gleich ist, obwohl die Mitnehmer in unterschiedlichen Abständen mit der Förderkette 130 verbunden sind, woraus der Mechanismus das Kriterium zum Absenken oder Nichtabsenken ableitet.

## Patentansprüche

1. Vorrichtung zum Trennen, Fördern und Gruppieren von flachen Gegenständen, insbesondere Biscuits, die über einen Vorratsschacht aneinanderliegend zu einer Trennstation geführt werden, wobei die Vorrichtung Fördermittel und eine Gruppierstation sowie einen Querförderer umfasst, um Gruppen von Gegenständen quer zur ersten Förderrichtung an eine Verpackungsmaschine zu übergeben, dadurch gekennzeichnet, dass die Fördermittel (10) eine erste Anzahl (N) von umlaufenden Trennmitteln (14,24,34,44...) umfassen, um die Gegenstände (19,20) in der Trennstation (7) zu trennen und sie bis zur Gruppierstation (9) weiter zu fördern, wo die Gegenstände übereinander gestapelt werden, dass die Fördermittel (10) eine zweite Anzahl (n) von umlaufenden Trennmitteln (44,17) umfassen, um jeweils eine gestapelte Gruppe von Gegenständen von der Gruppierstation (9) in den Bereich des Querförderers (16) zu bringen, der sie danach an die Verpackungsmaschine bringt, und dass der Abstand zwischen den Wirkungspunkten von zwei benachbarten Trennmitteln (24,34) der ersten Anzahl kleiner als die Distanz zwischen zwei benachbarten Trennmitteln (17,44) der zweiten Anzahl ist.

2. Vorrichtung nach Anspruch 1, dadurch gekennzeichnet, dass die Gruppierstation (9) eine Auflagefläche (5) für die Gegenstände aufweist, die tiefer als die Auflagefläche (4) der Trennstation (7) liegt, um die Gegenstände durch Ausnützung der Schwerkraft zu stapeln.

3. Vorrichtung nach Anspruch 1 oder 2, dadurch gekennzeichnet, dass die Auflagefläche (5) für die Gegenstände zwischen der Gruppierstation (9) und dem Querförderer (16) eine Ebene ist.

4. Vorrichtung nach einem der Ansprüche 1 bis 3, dadurch gekennzeichnet, dass die Gruppierstation (9) Haltemittel (15,15') aufweist, um die Gegenstände während der Gruppenbildung in einer Ruhelage zu halten.

5. Vorrichtung nach einem der Ansprüche 1 bis 4, dadurch gekennzeichnet, dass im Bereich der Gruppierstation (9) Ausschaltmittel vorhanden sind, um die Arbeitswirkung von jeweils mindestens einem mittleren Trennmittel (54;64) aus drei benachbarten Trennmitteln (44;54;64;17) in einem Bereich zwischen dem Querförderer (16) und der Gruppierstation (9) zu verhindern.

6. Vorrichtung nach Anspruch 5, dadurch gekennzeichnet, dass diese Ausschaltmittel derart ausgestaltet sind, dass sie auf einen Teil der Trennmittel wirken.

7. Vorrichtung nach Anspruch 5 oder 6, dadurch gekennzeichnet, dass Einschaltmittel vorhanden sind, um die Trennmittel (14) in Arbeitsstellung zu bringen, bevor sie zur Trennstation (7) gelangen.

8. Vorrichtung nach einem der Ansprüche 1 bis 7, dadurch gekennzeichnet, dass ein Schiebeförderer (18) vorhanden ist, um Gruppen von Gegenständen zu übernehmen und in den Querförderer (16) zu schieben.

9. Vorrichtung nach Anspruch 8, dadurch gekennzeichnet, dass der Schiebeförderer (18) ausgestaltet ist, um die Gruppen in einem von 90° verschiedenen Winkel in den Querförderer (16) zu schieben.

10. Vorrichtung nach einem der Ansprüche 2 bis 9, dadurch gekennzeichnet, dass in einem Abstand von den Auflageflächen (4,5) der Gruppierstation (9) und der Trennstation (7) mindestens ein Niederhalter (6) vorhanden ist, derart, dass die Gegenstände (25,26) zwischen diesem Niederhalter (6) und diesen Auflageflächen (4,5) geschoben werden können.

## Claims

1. Apparatus for separating, conveying and grouping flat articles, in particular biscuits, which are guided, in a state in which they rest against one another, via a supply shaft to a separating station, the apparatus comprising conveying means and a grouping station and a transverse conveyor in order to transfer groups of articles, transversely with respect to the first conveying direction, to a packaging machine, characterized in that the conveying means (10) comprise a first number (N) of circulating separating means (14, 24, 34, 44, etc.) in order to separate the articles (19, 20) in the separating station (7) and to convey them further to the grouping station (9), where the articles are stacked one on top of the other, in that the conveying means (10) comprise a second number (n) for circulating separating means (44, 17) in order to move a stacked group of articles in each case from the grouping station (9) into the region of the transverse conveyor (16), which then moves them to the packaging machine, and in that the distance between the points of action of two adjacent separating means (24, 34) of the first number is smaller than the distance between two adjacent separating means (17, 44) of the second number.

2. Apparatus according to Claim 1, characterized in that the grouping station (9) has a bearing surface (5) for the articles which is located at a lower level than the bearing surface (4) of the separating station (7), in order to stack the articles by utilizing the gravitational force.

3. Apparatus according to Claim 1 or 2, characterized in that the bearing surface (5) for the articles between the grouping station (9) and the transverse conveyor (16) is one plane.

4. Apparatus according to one of Claims 1 to 3, characterized in that the grouping station (9) has retaining means (15, 15') in order to retain the articles in a rest position during group formation.

5. Apparatus according to one of Claims 1 to 4, characterized in that switch-off means are provided in the region of the grouping station (9) in order to prevent the operation of in each case at least a central separating means (54; 64) of three adjacent separating means (44; 54; 64; 17) in a region between the transverse conveyor (16) and the grouping station (9).

6. Apparatus according to Claim 5, characterized in that said switch-off means are configured such that they act on some of the separating means.

7. Apparatus according to Claim 5 or 6, characterized in that switch-on means are provided in order to bring the separating means (14) into the operating position before they reach the separating station (7).

8. Apparatus according to one of Claims 1 to 7, characterized in that a push-action conveyor (18) is provided in order to receive groups of articles and to push them into the transverse conveyor (16).

9. Apparatus according to Claim 8, characterized in that the push-action conveyor (18) is configured in order to push the groups into the transverse conveyor (16) at an angle other than 90°.

10. Apparatus according to one of Claims 2 to 9, characterized in that at least one holding-down device (6) is provided at a distance from the bearing surfaces (4, 5) of the grouping station (9) and of the separating station (7), such that the articles (25, 26) can be pushed between said holding-down device (6) and said bearing surfaces (4, 5).

**Revendications**

1. Installation pour séparer, transporter et grouper des objets plats, notamment des biscuits, qui sont amenés les uns contre les autres par l'intermédiaire d'une colonne de réserve jusqu'à un poste de séparation, l'installation comprenant des moyens de transport et un poste de groupement ainsi qu'un transporteur perpendiculaire pour livrer des groupes d'objets à une machine d'emballage perpendiculairement à la première direction de transport, caractérisée en ce que les moyens de transport (10) comprennent une première quantité (N) de moyens de séparation tournants (14, 24, 34, 44 ...) destinés à séparer les objets (19, 20) dans le poste de séparation (7) et à les transporter plus loin jusqu'au poste de groupement (9) où les objets sont empilés les uns sur les autres, en ce que les moyens de transport (10) comprennent une seconde quantité (n) de moyens de séparation tournants (44, 17) destinés à amener à chaque fois un groupe d'objets empilés depuis le poste de groupement (9) jusqu'à la zone du transporteur perpendiculaire (16) qui les amène ensuite à la machine d'emballage, et en ce que la distance entre les points d'action de deux moyens de séparation voisins (24, 34) de la première quantité est plus petite que la distance entre deux moyens de séparation voisins (17, 44) de la seconde quantité.

2. Installation selon la revendication 1, caractérisée en ce que le poste de groupement (9) a une surface porteuse (5) pour les objets qui est plus basse que la surface porteuse (4) du poste de séparation (7) afin d'empiler les objets en exploitant la pesanteur.

3. Installation selon la revendication 1 ou 2, caractérisée en ce que la surface porteuse (5) pour les objets entre le poste de groupement (9) et le transporteur perpendiculaire (16) est un plan.

4. Installation selon l'une des revendications 1 à 3, caractérisée en ce que le poste de groupement (9) comporte des moyens de maintien (15, 15') pour maintenir les objets dans une position fixe pendant la formation d'un groupe.

5. Installation selon l'une des revendications 1 à 4, caractérisée en ce que des moyens de dégagement se trouvent dans la zone du poste de groupement (9) pour empêcher l'action d'au moins un moyen de séparation central (54 ; 64) parmi trois moyens de séparation voisins (44 ; 54 ; 64 ; 17) dans une zone située entre le transporteur perpendiculaire (16) et le poste de groupement (9).

6. Installation selon la revendication 5, caractérisée en ce que ces moyens de dégagement sont conçus de telle sorte qu'ils agissent sur une partie des moyens de séparation.

7. Installation selon la revendication 5 ou 6, caractérisée en ce que des moyens d'engagement sont présents pour amener les moyens de séparation (14) en position de travail avant qu'ils arrivent au poste de séparation (7).

8. Installation selon l'une des revendications 1 à 7, caractérisée en ce qu'un transporteur poussant (18) est présent pour prendre en charge des groupes d'objets et les pousser dans le transporteur perpendiculaire (16).

9. Installation selon la revendication 8, caractérisée en ce que le transporteur poussant (18) est conçu pour pousser les groupes dans le transporteur perpendiculaire (16) suivant un angle différent de 90°.

10. Installation selon l'une des revendications 2 à 9, caractérisée en ce qu'au moins un dispositif de limitation en hauteur (6) est présent à une certaine distance des surfaces porteuses (4, 5) du poste de groupement (9) et du poste de séparation (7) de telle sorte que les objets (25, 26) peuvent être glissés entre ce dispositif de limitation en hauteur (6) et les surfaces porteuses (4, 5).

Fig.1

Fig.2

Fig.3

Fig. 4